# EUROPEAN PATENT APPLICATION

(11) **EP 3 043 124 A1**
(43) Date of publication of application: **13.07.2016**
(21) Application number: 14841687.8
(22) Date of filing: 01.07.2014
(51) Int. Cl.: F25B 1/00, C09K 5/04, C10M 105/38, C10N 20/02, C10N 30/06, C10N 40/30

(54) **COMPRESSOR AND REFRIGERATION CYCLE DEVICE**

(30) Priority: 05.09.2013 JP 2013183838
(71) Applicant: Toshiba Carrier Corporation, Kawasaki-shi, Kanagawa 212-8585 (JP)
(72) Inventor: WATANABE, Norihisa, Fuji-shi Shizuoka 416-8521 (JP); SUZUKI, Hideaki, Fuji-shi Shizuoka 416-8521 (JP)
(74) Representative: Rehmann, Thorsten
(86) International application number: PCT/JP2014/067553
(87) International publication number: WO 2015/033653

(57) **Abstract**

According to one embodiment, a compressor uses R-32 as a refrigerant and contains a refrigerating machine oil. A liquid mixture of the refrigerating machine oil and the refrigerant is separated into two layers at a content of the refrigerating machine oil within a range of 10 to 40% by mass and a temperature within a range of -40 to 60°C, and is compatible at a content of the refrigerating machine oil of not more than 5% by mass and a temperature within a range of 20 to 40°C and also at a content of the refrigerating machine oil of not less than 55% by mass and a temperature within a range of 20 to 50°C.

## Description

### Technical Field

Embodiments of the present invention relate generally to a compressor and a refrigeration cycle apparatus.

### Background Art

A refrigerant compressor is incorporated into a refrigerator or a freezer. As the refrigerant used in the compressor, CFC-12 (R-12) or HCFC-22 (R-22) has been previously used. However, the use of these refrigerants is currently regulated since their ozone depletion potentials (ODPs) are high. Thus, the current mainstream is the use of R-404A, R-410A and HFC-134a (R-134a) whose ODPs are said to be zero (0). However, it has been pointed out that their global warming potentials (GWPs) are relatively high (GWP: about 1300 to 3300), though their ODPs are zero.

Under the circumstances, R-32, which is a hydrofluorocabon compound having zero ODP and a relatively low GWP (GWP: about 650), has recently attracted attention.

Incidentally, a refrigerating machine oil is contained in a refrigerant compressor to, for example, impart lubricity to the sliding portion and improve the sealability of the sealing portion. The refrigerating machine oil is required to have a good compatibility with a refrigerant. Some oils have been investigated as the refrigerating machine oil of a compressor using R-32 as the refrigerant. However, there is still required a refrigerating machine oil which can stably provide a compressor with lubricity for a long period of time in combination with the refrigerant R-32.

### Citation List

### Patent Literature

Patent Literature 1: JP 2011-184536 A

### Summary of Invention

### Technical Problem

Thus, there still exists a need for a compressor which uses R-32 as a refrigerant and is not significantly reduced in the lubricity of the sliding portions or other portions for a long period of time.

### Solution to Problem

According to an embodiment, there is provided a compressor which uses R-32 as a refrigerant and contains a refrigerating machine oil. A liquid mixture of the refrigerating machine oil and the refrigerant is separated into two layers at a content of the refrigerating machine oil within a range of 10 to 40% by mass and a temperature within a range of -40 to 60°C, and is compatible at a content of the refrigerating machine oil of not more than 5% by mass and a temperature within a range of 20 to 40°C, and also at a content of the refrigerating machine oil of not less than 55% by mass and a temperature within a range of 20 to 50°C.

### Brief Description of Drawings

FIG. 1 is a graph showing the behavior of compatibility between a refrigerant R-32 and a refrigerating machine oil according to an embodiment.
FIG. 2 is a partially cross-sectional view illustrating a refrigeration cycle apparatus provided with a compressor according to an embodiment.
FIG. 3 is a schematic view illustrating the refrigeration cycle apparatus provided with a liquid injection circuit.

### Mode for Carrying Out the Invention

Some embodiments will be described below.

A (refrigerant) compressor according to an embodiment uses R-32 as the refrigerant and contains a specified refrigerating machine oil. R-32 used as the refrigerant is difluoromethane, and its ODP is said to be zero and its GWP is said to be about 650.

The refrigerating machine oil contained in the compressor using R-32 as the refrigerant is such that a liquid mixture of it with the refrigerant R-32 is separated into two layers at a content of the refrigerating machine oil (oil content) of 10 to 40% by mass and a temperature of -40 to 60°C.

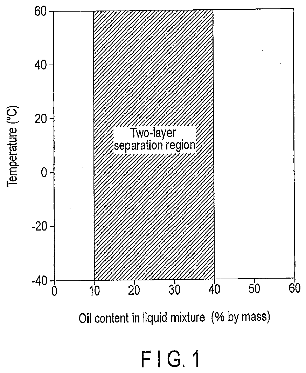

FIG. 1 illustrates the behavior of compatibility exhibited by the liquid mixture of the refrigerant R-32 and the refrigerating machine oil. The behavior of compatibility is measured according to "Test method of compatibility with refrigerant" defined in Appendix D of K2211-2009 of the Japanese Industrial Standards (JIS). The liquid mixture of the refrigerant R-32 and the refrigerating machine oil according to the embodiment is separated into two layers in the shaded region in FIG. 1, i.e., in the whole region having an oil content of 10 to 40% by mass at a temperature of -40 to +60°C. The separated two layers have different oil contents. In general, when the refrigerant R-32 and the refrigerating machine oil are separated into two layers in the whole range of a to b% by mass of the oil content, and are compatible with each other outside this range, the separated two layers are constituted by a layer having an oil content of a% by mass and a layer having an oil content of b% by mass.

When the oil content is 50% by mass or more, the proportion of the refrigerating machine oil is higher than that of the refrigerant. Therefore, the lubricity of the liquid mixture is assured by the refrigerating machine oil. On the other hand, when the oil content is less than 50% by mass, the proportion of the refrigerant is high, and thus the refrigerating machine oil is highly diluted, failing to obtain sufficient lubricity. In order to prevent the viscosity reduction of the refrigerating machine oil into which the refrigerant is dissolved (mixture of the refrigerating machine oil and the refrigerant dissolved in the refrigerating machine oil; hereinafter, simply referred to as a "refrigerant-dissolved oil") due to the high dilution, it has been found that, desirably, the liquid mixture of the refrigerant R-32 and the refrigerating machine oil is separated into two layers at an oil content of 40% by mass or less, making difficult further dissolution of the refrigerant in the refrigerating machine oil to occur. This is effective to assure reliability in the liquid-back operation in which the refrigerant is partially drawn into the sliding portion of the compressor in the liquid phase (stable lubricity for a long period of time). The refrigerating machine oil circulates inside the refrigeration cycle together with the refrigerant, during which several percent of the refrigerating machine oil with respect to the circulating amount of the refrigerant circulates. Therefore, in order to assure reliability, the refrigerating machine oil is required to be compatible with the refrigerant at a proportion of the oil of several percent. Thus, the liquid mixture of the refrigerant R-32 and the refrigerating machine oil is required not to be separated into layers at an oil content of 5% by mass or less.

The liquid mixture of the refrigerating machine oil and the refrigerant R-32 according to the embodiment is separated into two layers at the oil content and temperature range noted above. However, the liquid mixture is compatible at an oil content of 5% by mass or less and a temperature of 20 to 40°C, and is also compatible at an oil content of 55% by mass or greater and a temperature of 20 to 50°C.

Owing to the fact that the refrigerating machine oil exhibits such a partial compatibility with the refrigerant R-32, a compressor can be provided, which is not significantly reduced in lubricity in, for example, the sliding portion, for a long period of time.

The refrigerating machine oil of the embodiment satisfies all of the above requirements.

In one embodiment, the refrigerating machine oil exhibiting the partial compatibility with the refrigerant R-32 has a kinetic viscosity of 7.5 mm²/s or greater at 100°C. The refrigerant R-32 has a property that the discharge temperature from the compressor increases in comparison with a prior art refrigerant such as R-410A (under the conditions defined by the American Society of Heating, Refrigerating and Air-Conditioning Engineers (ASHRAE), the discharge gas temperature of R-32 is higher than that of a prior art refrigerant such as R-410A by 15°C or greater). Owing to the fact that the refrigerating machine oil has the above kinetic viscosity even at a high temperature of 100°C, the washing out of the refrigerating machine oil by the liquid refrigerant R-32 becomes less even when a wet gas is drawn into the compressor to suppress the increase in the discharge temperature, with the result that it is possible to ensure the lubricity of the sliding portion of the compressor for a long period of time, i.e., to ensure a high reliability.

Further, in one embodiment, the liquid mixture of the refrigerant R-32 and the above refrigerating machine oil (the refrigerant-dissolved oil) exhibits a kinetic viscosity of 1.0 mm²/s or greater at an oil content of 60% by mass and a temperature of 40°C. Since the molecular weight of the refrigerant R-32 is smaller than a conventional refrigerant, the viscosity of the refrigerant-dissolved oil is considerably reduced if a refrigerating machine oil having a high compatibility with the refrigerant is used as with the conventional refrigerant. However, since the refrigerating machine oil of the present embodiment is partially compatible with the refrigerant R-32, and its liquid mixture with the refrigerant R-32 (refrigerant-dissolved oil) exhibits the above kinetic viscosity at an oil content of 60% by mass and a temperature of 40°C, a high reliability can be ensured.

The refrigerating machine oil exhibiting the partial compatibility with the refrigerant R-32 and the various properties noted above usually comprises a synthetic ester oil(s), or consists essentially of a synthetic ester oil(s), or consists of a synthetic ester oil(s). The synthetic ester oil is preferably an esterification product of a polyol (polyhydric alcohol) and a monocarboxylic acid.

Examples of the polyhydric alcohol include neopentyl glycol, trimethylolpropane and pentaerythritol.

Examples of the monocarboxylic acid include saturated fatty acids having 7 to 9 carbon atoms. Such saturated fatty acids include branched-chain monocarboxylic acids such as 2-ethylhexanoic acid and a 3,5,5-trimethylhexanoic acid. In one embodiment, two or more monocarboxylic acids are used to produce an ester(s) (oil) with a hindered polyol.

In a preferred embodiment, the refrigerating machine oil is an esterification product of pentaerythritol with 2-ethylhexanoic acid and 3,5,5-trimethylhexanoic acid. In such esterification product, 2-ethylhexanoic acid and 3,5,5-trimethylhexanoic acid are esterified in total of 4 mol relative to 1 mol of pentaerythritol. In this case, the proportion of 2-ethylhexanoic acid in the sum of 2-ethylhexanoic acid and 3,5,5-trimethylhexanoic acid may be 40 to 50 mol% (the proportion of 3,5,5-trimethylhexanoic acid: 60 to 50 mol%). Water is produced as a by-product in the esterification reaction. By removing the water, the reaction proceeds more efficiently.

The refrigerating machine oil of the embodiment (the above synthetic ester oil(s) or esterification product) has a saturated water content which may be less than 2000 ppm at a temperature of 30°C and a relative humidity of 90%. The refrigerant R-32 is high in the discharge temperature as described above, and under such a high temperature environment, the lubricity is susceptible to moisture. However, the refrigerating machine oil, which has such a small saturated water content and hence has a low hygroscopicity (slow moisture absorption rate), can stably provide lubricity for a long period of time.

Into the refrigerating machine oil, an additive selected from an anti-oxidizing agent, a stabilizing agent and a copper deactivator may be blended.

An example of the anti-oxidizing agent is dibutyl-p-cresol (DBPC). The anti-oxidizing agent may be blended in an amount of 0.05 to 1.0% by mass with respect to the refrigerating machine oil. It has been found that the effect is insufficient when the amount of the anti-oxidizing agent is less than 0.05% by mass, while the effect comes close to saturation when the amount of the anti-oxidizing agent is greater than 0.5% by mass, making it unnecessary to add the anti-oxidizing agent in an amount of more than 1% by mass. In terms of the effect of addition and economic efficiency, the addition amount of the anti-oxidizing agent is preferably 0.1 to 0.5% by mass.

Examples of the stabilizing agent include epoxy compounds (for example, glycidyl ester and glycidyl ether). The stabilizing agent may be blended in an amount of 0.2 to 1.5% by mass with respect to the refrigerating machine oil. It has been found that the effect was insufficient when the amount of the stabilizing agent is less than 0.2% by mass, while the electrical insulating resistance may be adversely affected when the amount of the stabilizing agent is greater than 1.5% by mass. The addition amount of the stabilizing agent is preferably 0.25 to 1.5% by mass.

An example of the copper deactivator is benzotriazole (BTA). The copper deactivator can be added in an amount of 25 ppm or less with respect to the refrigerating machine oil.

A refrigeration cycle apparatus according to one embodiment comprises the compressor of the above embodiment, a condenser connected to the compressor, an expansion device connected to the condenser, and an evaporator connected between the expansion device and the compressor.

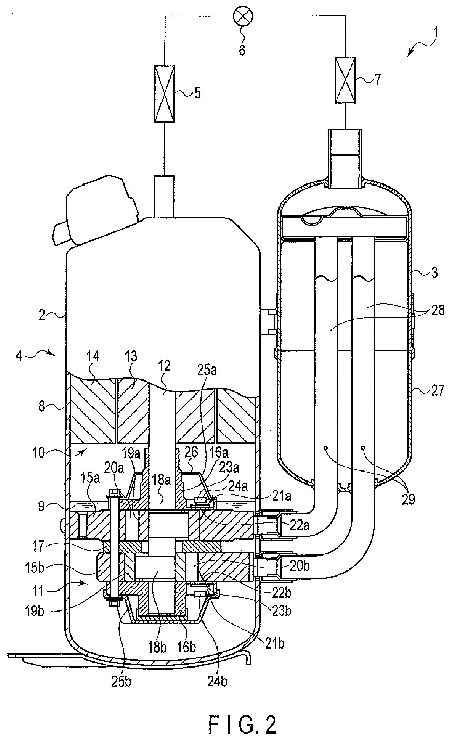

FIG. 2 illustrates a refrigeration cycle apparatus according to a more specific embodiment. R-32 is used as a refrigerant, and the refrigerating machine oil according to the above embodiment is used as a refrigerating machine oil.

The refrigeration cycle apparatus 1 illustrated in FIG. 2 comprises a compressor main body 2, an accumulator 3, a hermetic compressor 4 which compresses a low-pressure gaseous refrigerant, a working fluid, into a high-pressure gaseous refrigerant, a condenser 5 which is connected to the discharge side of the compressor main body 2 and condenses the high-pressure gaseous refrigerant into a liquid refrigerant, an expansion device 6 which is connected to the condenser 5 and depressurizes the liquid refrigerant, and an evaporator 7 which is connected between the expansion device 6 and the accumulator 3 and evaporates the liquid refrigerant.

The compressor main body 2 comprises a cylindrically-shaped sealed container 8, and a refrigerating machine oil 9 is accumulated on the bottom within the sealed container 8. Further, an electric motor portion 10 located on the upper side and a compression mechanism portion 11 located on the lower side are accommodated in the sealed container 8. The electric motor portion 10 and the compression mechanism portion 11 are connected via a rotating shaft 12 having the vertical central line and rotating around the central line.

The electric motor portion 10 comprises a rotator 13 fixed to the rotating shaft 12, and a stator 14 which is fixed to the sealed container 8 and is provided at a position surrounding the rotator 13. A permanent magnet (not shown) is provided in the rotator 13, and a coil (not shown) winds around the stator 14.

The compression mechanism portion 11 comprises a first cylinder 15a located on the upper side and a second cylinder 15b located on the lower side. A partition plate 17 is provided between the first cylinder 15a and the second cylinder 15b. A main bearing 16a which rotatably supports the rotating shaft 12 is fixed to the upper end surface of the first cylinder 15a. A sub-bearing 16b which rotatably supports the rotating shaft 12 is fixed to the lower end surface of the second cylinder 15b.

The rotating shaft 12 is arranged penetrating through the first and second cylinders 15a and 15b. A first eccentric portion 18a and a second eccentric portion 18b, which have the same diameter, are provided in the rotating shaft 12 at a phase difference of 180°. A first roller 19a is fitted into the first eccentric portion 18a, and a second roller 19b is fitted into the second eccentric portion 18b.

A first cylinder chamber 20a is formed inside the first cylinder 15a with both ends of the first cylinder 15a closed by the main bearing 16a and the partition plate 17. A second cylinder chamber 20b is formed inside the second cylinder 15b with both ends of the second cylinder 15b closed by the partition plate 17 and the sub-bearing 16b. The first roller 19a fitted into the first eccentric portion 18a is accommodated in the first cylinder chamber 20a, and the second roller 19b fitted into the second eccentric portion 18b is accommodated in the second cylinder chamber 20b. The first and second rollers 19a and 19b are provided such that they eccentrically move (eccentrically rotate) while their outer circumferential surfaces are in line-contact with the inner circumferential surfaces of the first and second cylinders 15a and 15b when the rotating shaft 12 rotates.

Accommodated in the first and second cylinder chambers 20a and 20b is a blade (not shown) which abuts its edge portion against the outer circumferential surfaces of the first and second rollers 19a and 19b, and divides the first and second cylinder chambers 20a and 20b into two spaces, respectively, whose capacity and pressure are changed with the rotation of the first and second rollers 19a and 19b.

A first discharge valve mechanism 21a is provided in the main bearing 16a. The first discharge valve mechanism 21a comprises a first discharge port 22a formed in the main bearing 16a, a first reed valve 23a which is a first discharge valve screwed to the main bearing 16a, and opens and closes the first discharge port 22a, and a first valve stopper 24a screwed to the main bearing 16a with the first reed valve 23a and restricting the maximum opening degree of the first reed valve 23a. The first discharge valve mechanism 21a is covered by a first muffler 25a attached to the main bearing 16a. A discharge hole 26 which communicates the inside with the outside of the first muffler 25a is formed in the first muffler 25a.

A second discharge valve mechanism 21b is provided in the sub-bearing 16b. The second discharge valve mechanism 21b has the same structure as the first discharge valve mechanism 21a described above. The second discharge valve mechanism 21b comprises a second discharge port 22b formed in the sub-bearing 16b, a second reed valve 23b which is a second discharge valve screwed to the sub-bearing 16b, and opens and closes the second discharge port 22b, and a second valve stopper 24b screwed to the sub-bearing 16b with the second reed valve 23b and restricting the maximum opening degree of the second reed valve 23b. The second discharge valve mechanism 21b is covered by a second muffler 25b attached to the sub-bearing 16b. The inside of the second muffler 25b communicates with the inside of the first muffler 25a through a gaseous refrigerant guiding path (not shown) formed penetrating through the sub-bearing 16b, the second cylinder 15b, the partition plate 17, the first cylinder 15a and the main bearing 16a.

The accumulator 3 comprises a cylindrical sealed case 27. The accumulator 3 is connected with the evaporator 7 such that a gaseous refrigerant vaporized in the evaporator 7 or a liquid refrigerant not vaporized in the evaporator 7 flows into the sealed case 27. Inside the sealed case 27, two suction tubes 28 are provided, each of which has one end opened on the upper side inside the sealed case 27 such that only the gaseous refrigerant inside the sealed case 27 flows thereinto. The other ends of the suction tubes 28 extend to the outside of the sealed case 27 through the lower end of the sealed case 27, and communicate with the first cylinder chamber 20a and the second cylinder chamber 20b of the compression mechanism portion 11, respectively. Oil return holes 29 into which the refrigerating machine oil accumulated on the bottom portion inside the sealed case 27 flows are formed in portions located on the lower side inside the sealed case 27 in the suction tubes 28, respectively.

In the hermetic compressor 4 having the above structure, the first roller 19a and the second roller 19b rotate eccentrically around the central line of the rotating shaft 12 when power is supplied to the electric motor portion 10, and thus the compression mechanism portion 11 is driven.

When the compression mechanism portion 11 is driven, the capacity and the pressure in the two spaces inside the first and second cylinder chambers 20a and 20b are changed with the eccentric rotation of the first and second rollers 19a and 19b. By the change in the capacity and the pressure, a low-pressure gaseous refrigerant flows from the accumulator 3 into the first and second cylinder chambers 20a and 20b through the suction tubes 25. The drawn-in low-pressure gaseous refrigerant is compressed in the first and second cylinder chambers 20a and 20b into a high-pressure gaseous refrigerant.

In the first cylinder 15a, the first reed valve 23a is opened when the pressure of the gaseous refrigerant in the first cylinder chamber 20a increases to a predetermined value. The high-pressure gaseous refrigerant in the first cylinder chamber 20a passes through the first discharge port 22a and is discharged to the first muffler 25a. The gaseous refrigerant discharged to the first muffler 25a is discharged to the sealed container 8 through the discharge hole 26 of the first muffler 25a.

In the second cylinder 15b, the second reed valve 23b is opened when the pressure of the gaseous refrigerant in the second cylinder chamber 20b increases to a predetermined value. The high-pressure gaseous refrigerant in the second cylinder chamber 20b passes through the second discharge port 22b and is discharged to the second muffler 25b. The gaseous refrigerant discharged to the second muffler 25b flows into the first muffler 25a through the gaseous refrigerant guiding path and is discharged from the first muffler 25a to the sealed container 8 through the discharge hole 26.

The high-pressure gaseous refrigerant compressed in the first and second cylinder chambers 20a and 20b and discharged to the sealed container 8 flows into the condenser 5 and becomes a liquid refrigerant through heat dissipation in the condenser 5. The liquid refrigerant flows into the expansion device 6 and is decompressed. After the decompression, the liquid refrigerant flows into the evaporator 7 and is evaporated, through absorption of heat, into a gaseous refrigerant. The gaseous refrigerant evaporated in the evaporator 7 flows into the accumulator 3 and undergoes gas-liquid separation (separation of liquid components contained in the gaseous refrigerant). Only the gaseous refrigerant passes through the suction tubes 28 of the accumulator 3, is supplied to the first and second cylinder chambers 20a and 20b of the compression mechanism portion 11, and is compressed again.

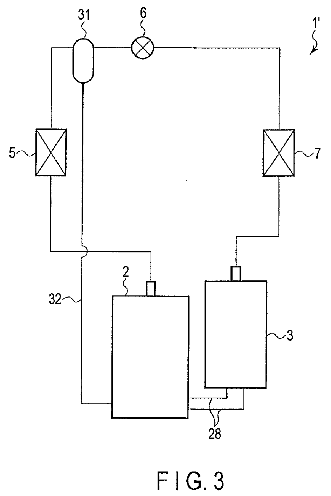

A refrigeration cycle apparatus 1' illustrated in FIG. 3 comprises, in addition to the refrigeration cycle apparatus 1 illustrated in FIG. 2, a liquid tank 31 which accumulates the liquid refrigerant condensed in the condenser 5, and a liquid injection line 32 which guides a part of the liquid refrigerant in the liquid tank 31 to the compression mechanism portion of the compressor main body 2. The liquid injection to the compression mechanism portion of the compressor main body 2 is effective as a measure to prevent overheating of the sliding portion of the compressor main body 2. However, in general, by the introduced liquid refrigerant, the refrigerating machine oil is washed out, or the degree of dilution is increased, decreasing the reliability. However, by using the refrigerating machine oil which has a partial compatibility with the refrigerant R-32 according to the embodiments, a high reliability can be assured even when the liquid injection is carried out.

### [Examples]

### Example 1

Using 2-ethylhexanoic acid and 3,5,5-trimethylhexanoic acid (their proportion was 50 mol% : 50 mol%) were used such that their amount was slightly greater than 4 mol in total relative to 1 mol of pentaerythritol, they were reacted to synthesize a desired esterification product (hindered polyol fatty acid ester oil).

It was confirmed by gas chromatography that the obtained esterification product consisted of esters in the proportions (area proportions) shown in Table 1 below.
[Table 1]

**Table 1**

| Components of esterification product | Proportion of components (%) |
|---|---|
| PE+(i-C8 fatty acid)₄ | 4 |
| PE+ (i-C8 fatty acid)₃(i-C9 fatty acid)₁ | 20 |
| PE+ (i-C8 fatty acid)₂(i-C9 fatty acid)₂ | 36 |
| PE+ (i-C8 fatty acid)₁(i-C9 fatty acid)₃ | 29 |
| PE+ (i-C9 fatty acid)₄ | 9 |
| Others | 2 |

| | |
|---|---|
| Note: "PE" stands for pentaerythritol; "i-C8 fatty acid" stands for 2-ethylhexanoic acid; "i-C9 fatty acid" stands for 3,5,5-trimethylhexanoic acid; "+" stands for ester bond; and the suffix stands for the number of moles relative to 1 mol of PE. | |

As shown in Table 1, the esterification product (ester oil) contains, as the main component (36%), the component in which 2 mol of each of 2-ethylhexanoic acid and 3,5,5-trimethylhexanoic acid have been esterified relative to 1 mol of pentaerythritol.

The kinetic viscosity of the obtained ester oil at 100°C was measured according to JIS K2283 and was 8.2 mm²/s. Further, this ester oil was blended with the refrigerant R-32, and the kinetic viscosity of the liquid mixture (oil content of 60% by mass) at 40°C was measured according to JIS K2283 and was 1.1 mm²/s.

The liquid mixture of the ester oil and the refrigerant R-32 was measured according to "Test method of compatibility with refrigerant" defined in JIS K2211 to confirm that it was separated into two layers at an oil content of 10 to 40% by mass and a temperature of -40 to 60°C, and that it was compatible at an oil content of 5% by mass or less and a temperature of 20 to 40°C, and at an oil content of 55% by mass or greater and a temperature of 20 to 50°C.

### Example 2

A desired esterification product was obtained in the same manner as in Example 1 except that the mol ratio of 2-ethylhexanoic acid to 3,5,5-trimethylhexanoic acid was 40 mol% to 60 mol%.

It was confirmed by gas chromatography that the obtained esterification product (ester oil) consisted of esters in the proportions (area proportions) shown in Table 2 below.
[Table 2]

**Table 2**

| Components of esterification product | Proportion of components (%) |
|---|---|
| PE+(i-C8 fatty acid)₄ | 2 |
| PE+ (i-C8 fatty acid)₃(i-C9 fatty acid)₁ | 13 |
| PE+ (i-C8 fatty acid)₂(i-C9 fatty acid)₂ | 32 |
| PE+ (i-C8 fatty acid)₁(i-C9 fatty acid)₃ | 35 |
| PE+ (i-C9 fatty acid)₄ | 14 |
| Others | 4 |

| | |
|---|---|
| Note: "PE" stands for pentaerythritol; "i-C8 fatty acid" stands for 2-ethylhexanoic acid; "i-C9 fatty acid" stands for 3,5,5-trimethylhexanoic acid; "+" stands for ester bond; and the suffix stands for the number of moles relative to 1 mol of PE. | |

As shown in Table 2, the esterification product (ester oil) contains, as the main components (32% + 35% = 67%), the components in which relative to 1 mol of pentaerythritol, 2-ethylhexanoic acid and 3,5,5-trimethylhexanoic in total of 4 moles have been esterified at a mole ratio of 50% : 50%, and have been esterified at a mole ratio of 25% : 75%, respectively.

The kinetic viscosity of the obtained ester oil at 100°C was measured and was 8.7 mm²/s. Further, this ester oil was blended with the refrigerant R-32, and the kinetic viscosity of the resultant liquid mixture (oil content of 60% by mass) at 40°C was measured according to JIS K2283 and was 1.2 mm²/s.

The liquid mixture of the ester oil and the refrigerant R-32 was measured according to "Test method of compatibility with refrigerant" defined in JIS K2211 to confirm that it was separated into two layers at an oil content of 10 to 40% by mass and a temperature of -40 to 60°C, and that it was compatible at an oil content of 5% by mass or less and a temperature of 20 to 40°C, and also at an oil content of 55% by mass or greater and a temperature of 20 to 50°C.

### Example 3

The ester oil synthesized in Example 1 or 2 was sealed as a refrigerating machine oil in the hermetic compressor having the structure illustrated in FIG. 2, and the compressor was incorporated into an air conditioner. The air conditioner was operated for 1000 hours with a wet gas (in a liquid-back state) as the intake gas. It was confirmed that the wear amount of each blade, each roller, the shaft and the bearing was equal to that of the operation with a dry gas as the intake gas, and was good.

The oil returnability of the air conditioner was observed when a long pipe having a length of 75 meters was used, or when the difference in elevation between the indoor unit and the outdoor unit was set to a large difference of 50 meters. In either case, the oil surface was not lowered in the compressor, confirming that the oil returnability was sufficient.

### Example 4

The air conditioner prepared in Example 3 was continuously operated for 1000 hours under a high temperature condition that the temperature of the discharge gas was 125°C to find that the wear amount of the blade and each roller did not present a problem, confirming sufficient lubricity even under a high temperature condition.

### Example 5

The same operation as in Example 4 was conducted except that 0.1% by mass of dibutyl-p-cresol was added as an anti-oxidizing agent to the refrigerating machine oil to observe no degradation by oxidation of the refrigerating machine oil although the operation was conducted under a high temperature condition, confirming sufficient oxidative and thermal stabilities.

### Example 6

The same operation as in Example 3 was conducted except that 0.5% by mass of glycidyl ester was added as a stabilizing agent to the refrigerating machine oil to observe no increase in the acid number due to hydrolysis of the refrigerating machine oil, confirming sufficient chemical stability.

### Example 7

The same operation as in Example 3 was conducted except that 10 ppm of benzotriazole was added as a copper deactivator to the refrigerating machine oil to find no occurrence of corrosion of the copper used for the pipe, etc., and of the phenomenon of copper plating due to elution of the copper, and no formation of sludge mainly of copper, confirming sufficient chemical stability.

According to the above embodiments and Examples, it is possible to provide a compressor which does not significantly lower the lubricity of sliding portions and other portions for a long period of time, and a refrigeration cycle apparatus comprising the compressor.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A compressor which uses R-32 as a refrigerant and contains a refrigerating machine oil, **characterized in that** a liquid mixture of the refrigerating machine oil and the refrigerant is separated into two layers at a content of the refrigerating machine oil within a range of 10 to 40% by mass and a temperature within a range of -40 to 60°C, and is compatible at a content of the refrigerating machine oil of not more than 5% by mass and a temperature within a range of 20 to 40°C, and also at a content of the refrigerating machine oil of not less than 55% by mass and a temperature within a range of 20 to 50°C.

2. The compressor of Claim 1, **characterized in that** the refrigerating machine oil is an esterification product of polyhydric alcohol with two or more monocarboxylic acids selected from saturated fatty acids having 7 to 9 carbon atoms.

3. The compressor of Claim 2, **characterized in that** the polyhydric alcohol is selected from the group consisting of neopentyl glycol, trimethylolpropane and pentaerythritol.

4. The compressor of Claim 2 or 3, **characterized in that** the two or more monocarboxylic acids include 2-ethylhexanoic acid and 3,5,5-trimethylhexanoic acid.

5. The compressor of any one of Claims 1 to 4, **characterized in that** the refrigerating machine oil exhibits a kinetic viscosity of 7.5 mm²/s or greater at 100°C.

6. The compressor of any one of Claims 1 to 5, **characterized in that** the liquid mixture exhibits a kinetic viscosity of 1.0 mm²/s or greater at a content of the refrigerating machine oil of 60% by mass and a temperature of 40°C.

7. The compressor of any one of Claims 1 to 6, **characterized in that** an additive selected from the group consisting of an anti-oxidizing agent, a stabilizing agent and a copper deactivator is blended into the refrigerating machine oil.

8. A refrigeration cycle apparatus **characterized by** comprising the compressor according to any one of Claims 1 to 7, a condenser connected to the compressor, an expansion device connected to the condenser, and an evaporator connected between the expansion device and the compressor.
